# EUROPÄISCHE PATENTANMELDUNG

(11) **EP 0 814 351 A2**
(43) Veröffentlichungstag der Anmeldung: **29.12.1997**
(21) Anmeldenummer: 97110146.4
(22) Anmeldetag: 20.06.1997
(51) Int. Cl.: G02B 1/11

(54) **Wärmedämmende Anti-Reflex-Beschichtung und Verfahren zu deren Herstellung**

(30) Priorität: 21.06.1996 DE 19624838
(71) Anmelder: Semco Glasbeschichtung GmbH, 17034 Neubrandenburg (DE)
(72) Erfinder: Jäger,Steffen,Dipl.-Phys.Dr., 38102 Braunschweig (DE); Schüller,Hermann G., 26215 Wiefelstede (DE)
(74) Vertreter: Hertz, Oliver

(57) **Zusammenfassung**

Bei einem wärmedämmenden Anti-Reflex-Schichtsystem, das aus Interferenzschichten und/oder mindestens einer Gradientenschicht aufgebaut und mindestens einseitig auf einem für sichtbares Licht transparenten Träger aufgebracht ist, ist mindestens eine der Interferenz- und/oder Gradientenschichten durch eine transparente und leitfähige Wärmedämmschicht ersetzt.

## Beschreibung

Die Erfindung betrifft reflexionsmindernde, transparente Schichtsysteme (sog. Anti-Reflex-Schichtsysteme, AR-SS) mit Wärmedämmung.

Es ist bekannt, das Reflexionsvermögen von Oberflächen durch das Aufbringen von Interferenzschichtsystemen zu reduzieren. Derartige Schichtsysteme lassen sich durch eine geeignete Kombination von hoch-, niedrig- und auch mittelbrechenden transparenten Schichten (z. B. Metalloxide, Fluoride) realisieren.

Für eine hochqualitative Entspiegelung von transparenten Substratmaterialien (z. B. Glas, Kunststoffe) ist das Aufbringen entsprechender Anti-Reflex-Schichtsysteme auf beiden Oberflächen erforderlich. Auf diese Weise lassen sich sehr geringe Restreflexionen (≤ 1 %, nahezu über den gesamten sichtbaren Spektralbereich bei zweiseitiger Beschichtung) erzielen.

Derartige Entspiegelungsschichtsysteme haben bis heute vor allem auf den Gebieten der Fein- und Brillenoptik (Linsen, Strahlungsteiler, Brillengläser etc.) eine breite industrielle Anwendung gefunden. Als Beschichtungsverfahren werden hierbei vorwiegend speziell modifizierte Vakuumaufdampfverfahren (Elektronenstrahlverdampfung, ionenunterstützte Verfahren etc.) sowie auch plasmachemische Beschichtungstechniken (CVD-Prozesse; "Chemical Vapour Deposition") genutzt. Für eine gleichmäßige und wirtschaftliche Abscheidung von AR-SS auf großen Substratabmessungen (> 1 x 1 m²) sind die genannten Verfahren jedoch nicht geeignet.

Für die großflächige Breitbandentspiegelung von Glas (z. B. Float- und Weißglas; mehrere Quadratmeter) werden heute vorwiegend Kathodenzerstäubungsverfahren bzw. angelehnte Techniken sowie auch naßchemische Verfahren (Sol-Gel-Prinzip) eingesetzt. Es werden dabei Kombinationen von hoch- und niedrigbrechenden Materialien eingesetzt. Als Materialien finden u. a. das niedrigbrechende Siliciumdioxid (SiO₂, Brechungsindex n ca. 1.46) und das hochbrechende Titandioxid (TiO₂, n = 2.1 ... 2.7) Anwendung. Durch entsprechende Mischungen der beiden Substanzen können ggf. auch mittelbrechende Materialien erhalten werden. Weitere geeignete hochbrechende Schichtmaterialien sind z. B. Oxide der Elemente Ta, Zr, Y, Hf, Bi usw..

Diese Schichtsysteme sind generell so konstruiert, daß eine möglichst niedrige Restreflexion bei einer gleichzeitig hohen Bandbreite sichergestellt ist. In der Praxis ist deshalb die Verwendung von besonders hochbrechenden Schichtmaterialen (Brechungsindex > 2.1) favorisiert. Dies erklärt auch, weshalb das hochbrechende TiO₂ hierbei eine dominierende Stellung besitzt.

Unter Berücksichtigung wirtschaftlicher Aspekte sind die Schichtpakete derart aufgebaut, daß nur geringe Schichtdicken erforderlich sind.

Für großflächige Applikationen von Anti-Reflex-Schichtsystemen (AR-SS), insbesondere in kälteren Klimagebieten (z. B. Nordeuropa), ist der Einsatz der genannten dielektrischen Schichtmaterialien mitunter ungeeignet. Die genannten Schichtmaterialien sind für Wärmestrahlung (Infrarot (IR)-Strahlung) nahezu vollkommen durchsichtig. Somit kann mit diesen Schichtsystemen keine Verringerung von Wärmeverlusten im Gebäudebereich (Wärmedämmung) erreicht werden, wie sie heute durch die konventionellen Wärmeschutz-Beschichtungen ("Low-E-Beschichtungen") möglich ist.

Ferner sind transparente und leitfähige Oxidschichten (sog. "TLO", undotierte und dotierte Halbleitermaterialien) bekannt, die für die folgenden Anwendungen eingesetzt werden:
(a) Bildung transparenter Elektroden für Solarzellen, Flachbildschirme und opto-elektronische Bauelemente,
(b) Bildung antistatisch wirkender Beschichtungen in TV- und Computermonitoren sowie für Kathodenstrahlröhren,
(c) Nutzung als Wärmespiegel in Beleuchtungsquellen, und
(d) Verwendung für Low-E-Beschichtungen in Fensterverglasungen.

Zur Schichtherstellung werden sowohl naßchemische Verfahren (nach dem Prinzip der Sol-Gel-Technik), PVD-Abscheideverfahren (Physical Vapour Deposition) als auch pyrolytische Verfahren eingesetzt.

So beschreiben JP 92-118061 (N. Takamya et al.: "Coating materials for formation of electrically conductive films with high refraction, and transparent material-laminated bodies having the films") und JP 92-337719 (Y. Suzuki: "Manufacture of coating solutions for preparation of antireflective-antistatic films") die Herstellung antistatischer Sol-Gel-Beschichtungen. Eine für diese Applikation ausreichende Leitfähigkeit wird durch die Einlagerung von leitfähigen Mikropulvern in ein isolierendes Matrixmaterial erzeugt. Durch das Aufbringen einer zusätzlichen niedrigbrechenden Schicht konnte eine gewisse Glanzminderung (durch Lichtstreuung; siehe JP 92-337719) erhalten werden, die jedoch auch die Transparenz des Gesamtsystems nachteilig verringerte.

Ein weiteres Verfahren zur Vermeidung elektrostatischer Aufladungen, bei dem eine nur 1 bis 2 nm dicke leitfähige Metall- oder Metallegierungsschicht in ein Entspiegelungsschichtpaket eingebaut ist, wird in JP 87-238234 (M. Ikadai et al.: "Electrically conductive antireflection film-coated transparent plate") vorgestellt. Aber auch durch die Abscheidung von In₂O₃:Sn-Schichten kann eine antistatische Wirkung erzeugt werden. So wird in der Publikation Appl. Opt. 28 (1989) 14, 2792 (O. Marcovitch et al.: "Transparent conductive indium oxide film deposited on low temperature substrates by activated reactive evaporation") ein Verfahren beschrieben, bei dem das Reflexionsvermögen einer dünnen, auf dem Substrat abgeschiedenen In-Sn-Schicht durch eine aufgedampfte Magnesiumfluoridschicht verringert werden kann.

Weitere Verfahren zur Vermeidung von Aufladungserscheinungen basieren darauf, daß eine sehr dünne, nicht interferierende elektrisch leitfähige Schicht (In₂O₃:Sn; Schichtdicke ca. 10 nm) direkt auf die äußerste Position eines TiO₂-SiO₂-Schichtsystems aufgebracht wird (siehe Res. Discl. 323(1991)207 (A. A. Kawada; "Anti-static, anti-reflection coating for light valve tube")).

Diese dargestellten Verfahren zielen ausschließlich nur auf die Vermeidung bzw. Verminderung von elektrostatischen Aufladungen (Anti-Statik) ab. Eine Nutzung zur Wärmedämmung ist mit diesen Schichtsystemen wegen der geringen Schichtdicken nicht möglich.

Desweiteren ist bekannt, daß Fluor-dotiertes SnO₂ als Wärmeschutzschicht (Low-E) eingesetzt werden kann. Die heute am Markt erhältlichen Low-E-Schichten werden dabei über einen direkt in die Floatglasherstellung integrierten pyrolytischen Beschichtungsprozeß erzeugt. Mit diesen Schichten (Schichtfolge: Floatglas/Zwischenschicht/SnO₂:F) lassen sich k-Werte von ca. 1.7 W/m²K in Standard-Isolierverglasungen (Argonfüllung) erhalten.

Diese Schichten besitzen jedoch die folgenden Nachteile. Die SnO₂:F-Schichten weisen keinerlei reflexionsmindernde oder transmissionserhöhende Eigenschaften auf. Sie besitzen sogar eine lichtdurchlässigkeitsvermindernde Wirkung. Eine Kombination mit Interferenzschichten als Antireflexions-Schichtsystemen besteht nicht. Ferner ist ihre Herstellung an die beschriebenen Pyrolyseverfahren gebunden. Aufgrund der nur einseitig möglichen Beschichtung von Substraten, ist der Einsatz dieser Schichten nur eingeschränkt möglich.

Es besteht ein starker Bedarf nach kostengünstigen Verglasungen, die hohen Anforderungen sowohl hinsichtlich der Reflexionsminderung als auch in Bezug auf die Wärmedämmung genügen.

Aufgabe der vorliegenden Erfindung ist es daher, ein verbessertes Anti-Reflex-Schichtsystem zu schaffen, das bei einfachem Aufbau und unter verringertem Durchlässigkeitsverlust reflexionsmindernd und wärmedämmend wirkt und für die großflächige Aufbringung auf transparenten Substraten geeignet ist, und ein Verfahren zu dessen Herstellung anzugeben.

Diese Aufgabe wird durch ein Anti-Reflex-Schichtsystem mit den in Patentanspruch 1 angegebenen Merkmalen bzw. ein Wärmeschutzglas mit einem solchen Schichtsystem und ein Verfahren gemäß Patentanspruch 13 gelöst. Vorteilhafte Ausführungsformen der Erfindung ergeben sich aus den abhängigen Ansprüchen.

Die Erfindung beinhaltet insbesondere Anti-Reflex-Schichtsysteme (AR-SS), bei denen transparente und leitfähige Schichtmaterialien dazu verwendet werden, direkt in ein AR-Interferenzschichtsystem eingebunden zu werden.

Es hat sich überraschenderweise gezeigt, daß bei dem erfindungsgemäßen Austausch der hoch- und/oder auch mittelbrechenden Schichten oder von Schichten mit einem senkrecht zur Schichtebene bestehenden Brechzahlverlauf (Gradientenschichten oder Multilayerschichten) in Standard-Anti-Reflex-Schichtpaketen durch mindestens eine Wärmedämmschicht (wärmereflektierende Materialien), die dann simultan wie eine Interferenzschicht zur Reflexionsminderung beiträgt, nunmehr auch niedrigemittierende AR-Verglasungen hergestellt werden können.

Derartige wärmereflektierende Schichtmaterialien müssen neben der hohen IR-Reflexion (hohe elektrische Leitfähigkeit) weitere Bedingungen erfüllen. So müssen diese Materialien einerseits eine hohe Lichtdurchlässigkeit im sichtbaren Spektralbereich aufweisen. Andererseits müssen die Schichten geeignete Brechungsindices aufweisen, damit sie direkt als hoch- und/oder mittelbrechendes Material in das auf Interferenz aufbauende AR-SS eingebaut werden können. Eine weitere, für die industrielle Umsetzung erforderliche Voraussetzung besteht natürlich auch in der Kompatibilität der Beschichtungstechnologien.

Es hat sich gezeigt, daß die genannten Forderungen für wärmedämmende AR-Beschichtungen durch transparente und leitfähige Oxidschichten (TLO, undotierte und dotierte Halbleitermaterialien) erfüllt werden, falls diese abweichend von den bisherigen Verwendungen mit Dicken aufgebracht werden, die geeignet sind, die reflexionsmindernde Wirkung von AR-SS zu gewährleisten.

Diese Dicken liegen weit oberhalb der bei der Bildung antistatisch wirkender Schichten verwendeten Dicken (Größenordnung 10 nm) und unterhalb der bei der Bildung wärmedämmend wirkender Schichten verwendeten Dicken (Größenordnung 200 - 350 nm). Um dennoch eine genügende Wärmedämmung zu erzielen, werden erfindungsgemäß durch geeignete Materialauswahl oder Bedingungen bei der Schichtherstellung TLO mit hoher Leitfähigkeit (spezifische Widerstände im Bereich unterhalb 2·10⁻³ Ωcm) eingesetzt.

Gemäß einem speziellen Aspekt der Erfindung wird ein Wärmeschutzglas angegeben, das mit einem erfindungsgemäßen AR-SS versehen ist. Dieses kann als Verbundverglasung mit mehreren Trägerglasebenen (Isolierglaseinheit) aufgebaut sein. Das erfindungsgemäße AR-SS kann dabei auf einer oder mehreren Oberflächen der Glasebenen vorgesehen sein.

Ausführungsformen der Erfindung werden im folgenden unter Bezug auf die beigefügten Zeichnungen beschrieben. Es zeigen:
Fig. 1: den schematischen Aufbau einer beidseitigen AR-Beschichtung;
Fig. 2: beispielhaft den schematischen Aufbau von erfindungsgemäßen, symmetrischen wärmedämmenden Anti-Reflex-Schichtsystemen bestehend aus drei (a) oder vier (b) Teilschichten;
Fig. 3: den schematischen Aufbau einer erfindungsgemäßen Isolierglaseinheit; und
Fig. 4: Reflexionsspektren von wärmedämmenden Anti-Reflex-Schichtsystemen (an einer Grenzfläche, vgl. Beispiel 2).

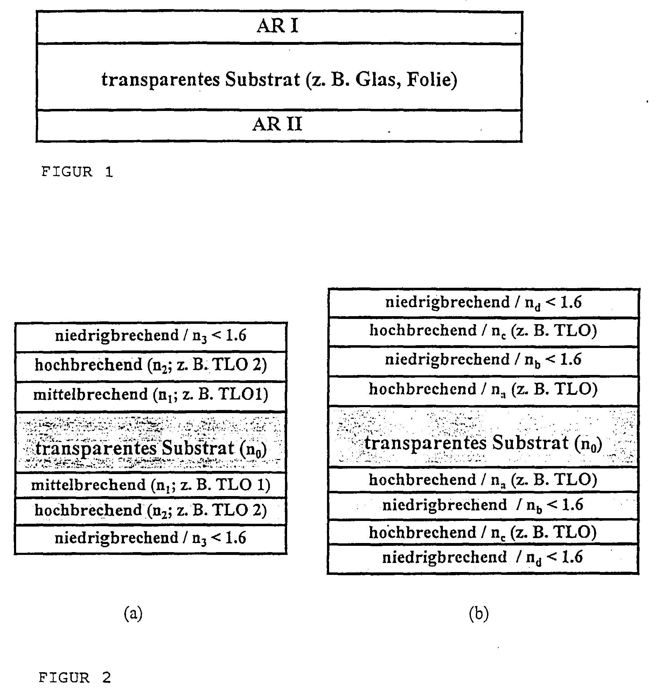

Eine typische beidseitige AR-Beschichtung eines transparenten Substrates ist schematisch in Fig. 1 dargestellt. Die Beschichtungen können auf Glas (Float- oder Weißglas, speziell vorbehandeltes Glas - z. B. vorgespanntes Glas, Verbundsicherheitsglas) oder auch Kunststoffen erfolgen.

Die beiden Anti-Reflex-Schichtsysteme (AR I und AR II) müssen dabei nicht unbedingt identisch sein. Vielmehr lassen sich durch speziell angepaßte Schichtsysteme farbige Restreflexe in gewünschter Weise verstärken oder auch teilweise kompensieren (ggf. Erzeugung eines neutralen Farbeindruckes). Eine derartige asymmetrische Entspiegelung kann auch dazu genutzt werden, eine weitere Reduzierung des Gesamtreflexionsvermögens zu erreichen. Es ist aber auch möglich, die in das Interferenzschichtsystem eingebundenen TLO-Schichten mit weiteren hochbrechenden Materialien (Oxide der Elemente Ti, Ta, Zr, Hf, Hf, Ce, Nb, Y, Bi, deren Gemische sowie weiteren Nitriden, Oxynitriden, Oxycarbiden - z. B. Si₃N₄ 0oder SiOₓN_{y} usw.) zu kombinieren.

Diese wärmedämmenden AR-Beschichtungen lassen sich dann als Einfach-, Isolierverglasungen usw. für die genannten Anwendungen einsetzen.

In Fig. 2 ist der schematische Aufbau des erfindungsgemäßen wärmedämmenden AR-Schichtsystems beispielhaft dargestellt. Hierbei handelt es sich um ein wärmedämmendes AR-Schichtsystem, welches im häufig praktizierten Fall aus nur drei Teilschichten aufgebaut ist. Ein derartiges 3-Schichtsystem genügt vielfach schon den heute gestellten Anforderungen. Die Anzahl der Teilschichten läßt sich aber beliebig verändern. Die Herstellung von wärmedämmenden AR-SS mit mehr Teilschichten ist dabei vorwiegend nur eine Frage des Beschichtungsaufwandes (Beschichtungskosten). Es hat sich beim Schichtdesign gezeigt, daß mit einem 3- oder 4-Schichtsystemen schon für die praktische Anwendung ausreichende Eigenschaften möglich sind.

Die hier verwendeten Begriffe hoch-, mittel- und niedrigbrechend bezeichnen insbesondere die gegenseitige Relation der Brechzahlen. Sie können aber auch quantitativen Bereichen von rund 1,4 - 1,55 (niedrig), rund 1,55 - 1,9 (mittel) und oberhalb rund 1,9 (hoch) zugeordnet werden. Im Einzelfall hängt dies von den Eigenschaften des Gesamtschichtsystems und den interessierenden Wellenlängen ab.

Als geeignete transparente und leitfähige Schichtmaterialien lassen sich undotierte und dotierte Halbleiter mit einer genügend großen optischen Bandlücke (möglichst > 3 eV), wie z. B. Oxide auf der Basis von In, Sn, Zn, Cd, V, Ru, Mg, Pb, Cu sowie deren Gemische, einsetzen. Durch eine entsprechende n-Dotierung dieser Materialien läßt sich die spezifische Leitfähigkeit um mitunter mehrere Größenordnungen verbessern. Die Dotierung kann sowohl aus dem Targetmaterial, aus der Gasphase als auch einer Kombination aus beiden erfolgen. Als Dotierungsmaterialien werden allgemein Elemente der III. bzw. V. Hauptgruppe, insbesondere In oder Al verwendet. Die Dotantenkonzentration liegt unterhalb 20 Atom%, vorzugsweise unterhalb 10 Atom%.

Neben der hohen Lichtdurchlässigkeit im sichtbaren Spektralbereich und dem hohen Reflexionsvermögen im IR-Bereich (> 2.5 µm) weisen die abgeschiedenen transparenten und leitfähigen Materialien zusätzlich eine starke Lichtabsorption im nahen infraroten Spektralbereich auf (1 µm bis 2.5 µm). Die spektrale Lage der dafür verantwortlichen Plasmafrequenz hängt in starkem Maße vom verwendeten Material, der Konzentration an freien Ladungsträgern usw. ab. Daher ist es unter Verwendung dieser Beschichtungen darüber hinaus möglich, einen Teil des Sonnenspektrums im Bereich zwischen 1 µm und 2.5 µm zu absorbieren und damit zusätzlich eine Sonnenschutzwirkung zu erzielen. Dies kann mit den konventionellen, auf reinen dielektrischen Schichten aufbauenden AR-Schichten nicht erreicht werden.

Die transparenten und leitfähigen Schichten werden dabei direkt als hoch- und/oder mittelbrechende Materialien in den AR-SS eingesetzt. Wie die Untersuchungen zeigen, lassen sich die Brechungsindizes im Bereich von ca. 1.7 bis ca. 2.1 im sichtbaren Spektralbereich durch die Wahl des jeweiligen Schichtmaterials (Art des Basismaterials, Art und Konzentration der Dotanten, Art der mehrkomponentigen Mischung) und/oder geeigneter Abscheidebedingungen (Depositionsrate, Targetmaterial, Druck, Reaktivgaszusammensetzung, Substrattemperatur usw.) einstellen. Entscheidend für die wärmedämmende Funktion der AR-Schichtsysteme ist dabei nur der Widerstand und somit die Gesamtdicke (geometrische bzw. optische Dicke) der jeweils eingesetzten TLO-Teilschichten. Es wurde festgestellt, daß bei gut leitenden Materialien (spezifischer Widerstand ca. 5*10⁻⁴ Ωcm) eine Gesamtschichtdicke oberhalb rund 80 nm, vorzugsweise von ca. 150 nm, bzw. eine optische Dicke von λ₀/2 (λ₀... Bezugswellenlänge) für die TLO-Teilschicht/-en pro Schichtpaket gerade ausreicht, um noch brauchbare Wärmedämmwerte zu erreichen. Z. B. können unter den genannten Bedingungen Doppel-Isolierglaseinheiten mit einem Wärmedurchgangskoeffizienten nach DIN 52619 (Teil 2) von ca. 1.7 W/m²K bei Argonfüllung hergestellt werden (vergl. Ausführungsbeispiel 1).

Analoge Wärmedämmwerte bei ähnlichen optischen Eigenschaften wurden auch bei der Herstellung von 4-Schichtsystemen mit der Schichtfolge Substrat/TLO/SiO₂/TLO/SiO₂ erreicht (vergl. Fig. 2b).

Erfindungsgemäß werden durch die Einbindung noch dickerer TLO-Schichten (optische Dicke > λ₀/2 oder auch Vielfache davon) in den wärmedämmenden AR-SS die wärmetechnischen Daten weiter verbessert (vergl. Ausführungsbeispiel 2).

Da der Brechungsindex der transparenten und leitfähigen Schichtmaterialien geringer als der des TiO₂ ist, werden ggf. Kompromisse hinsichtlich erreichbarem Restreflexionsvermögen und der entsprechenden Bandbreite eingegangen. Durch eine Optimierung des Schichtaufbaues lassen sich jedoch, wie in den Ausführungsbeispielen dokumentiert, Schichtsysteme herstellen, die den in der Praxis gestellten Anforderungen genügen.

### Ausführungsbeispiele

Die Abscheidung der Schichtsysteme wird in einer konventionellen Vakuumbeschichtungsanlage realisiert. Die Einzelschichten werden dabei insbesondere mittels Kathodenzerstäubung (z. B. DC-, RF-, Mittelfrequenz-Magnetronsputtern) aufgebracht. Es lassen sich sowohl keramische als auch metallische Targetmaterialien verwenden. Im beschriebenen Beispiel kamen vorwiegend metallische Targetmaterialien zum Einsatz. Die Beschichtungsprozesse werden reaktiv in einem Arbeitsgas-Reaktivgas-Gemisch (z. B. Ar-O₂-Gemisch) unter üblichen Depositionsbedingungen durchgeführt.

Besonders geeignet erwies sich als Beschichtungsverfahren die bei Mittelfrequenz (einige 10 kHz) betriebene reaktive magnetfeldunterstützte Kathodenzerstäubung. Es wurde dabei mit einer Doppelkathodenanordnung gearbeitet, bei der die beiden einzelnen Kathoden jeweils phasenverschoben betrieben werden. Dadurch ist es möglich, trotz unvermeidbarer parasitärer Bedeckungen des Targets und der Prozeßkammer mit isolierenden Reaktionsprodukten, eine hohe Stabilität der Beschichtungsprozesse über einen langen Zeitraum auf großen Substratabmessungen (Kathodenbreite > 3 m) zu sichern. Neben sinusförmigen Ausgangssignalen der Stromversorgungseinheiten lassen sich auch gepulste Stromversorgungen einsetzen.

Als Substratmaterial wird kommerzielles Floatglas verwendet. Als niedrigbrechende Materialien kamen oxidische Siliciumverbindungen (z. B. SiOₓ, SiₓC_{y}O_{z}) zum Einsatz.

Vor der Beschichtung werden zunächst die Schichtdicken aller Einzelschichten des AR-Schichtsystems berechnet. Bei den Berechnungen ist es erforderlich, schon die realen, wellenlängenabhängigen Schichtparameter, wie Brechungsindex n und Absorptionskonstante k, zugrunde zu legen. Die gewonnenen Daten können darüber hinaus bei der Prozeßregelung eingesetzt werden.

Die Herstellung der beidseitig entspiegelten und wärmedämmenden Beschichtungen erfolgt dann nach folgenden Verfahrensschritten:

Nach dem Waschen der Substrate (Glasscheiben) werden diese in die Vakuumkammer eingeschleust. Durch einen zusätzlichen Glimmprozeß (optionell) in der Vakuumkammer lassen sich noch auf der Substratoberfläche vorhandene Adsorbate (z. B. Wassermoleküle und anderen Verunreinigungen) entfernen. Anschließend erfolgt die sequentielle Abscheidung der einzelnen Teilschichten mit jeweils definierter optischer Dicke.

Als Schichtmaterialien werden in dem beschriebenen Beispiel SiOₓ (niedrigbrechendes Material; n ca. 1.46-1.47) und ZnO:Al (hochbrechendes Material; n ca. 1.95) verwendet. Die Al-Dotierung erfolgte direkt über das Targetmaterial. Besonders geeignet erwiesen sich Al-Konzentrationen von ca. 0.5 Gew.% bis 10 Gew. % im Target; es ließen sich spezifische Widerstände von weniger als 5*10⁻⁴ Ωcm realisieren. Wie aus Röntgenbeugungsmessungen hervorgeht, weisen die ZnO:Al-Kristallite eine bevorzugte [002]-Orientierung auf.

Als weitere mögliche Dotanten für ZnO erwiesen sich weitere Elemente der III. Hauptgruppe wie Bor, Gallium, Indium und Thallium.

Generell erfolgt die jeweilige Dotierung aus dem Targetmaterial oder aus der Gasphase oder auch mit einer Kombination aus diesen beiden Möglichkeiten.

Durch eine Erhöhung der Substrattemperatur (im Bereich unterhalb 420°C) ist eine weitere Verbesserung der Leitfähigkeit und Transparenz möglich. Dabei waren schon Temperaturen im Bereich unterhalb von 250 °C, vorzugsweise unterhalb von 150 °C, zur Erreichung der für die Applikation geforderten Schichteigenschaften ausreichend. Die Schichten lassen sich aber auch bei nahezu Raumtemperatur abscheiden, wobei sich die Leitfähigkeitswerte geringfügig verringern. Die Schichtsysteme können aber auch einer thermischen Nachbehandlung (Temperprozeß) zur Optimierung der optischen und/oder elektrischen Eigenschaften unterzogen werden. Eine reduzierende Temperatmosphäre bzw. Vakuumbedingungen kann sich dabei eigenschaftsverbessernd auswirken.

Durch eine simultane optische in-situ Messung von Transmission, Reflexion und/oder Farbwerte wird eine nahezu vollständige on-line Kontrolle der relevanten Schichteigenschaften (optische Dicke, Brechungsindex) vorgenommen. Die gewonnenen optischen Meßdaten lassen sich ebenfalls in das Prozeßsteuerungskonzept einbinden. Zur Gewährleistung einer guten Reproduzierbarkeit ist es dabei von Vorteil, die optischen Messungen mindestens nach der Deposition einer jeden Teilschicht vorzunehmen.

Nach Aufbringen des gesamten Schichtpaketes werden die Substrate gewendet und die beschriebene Verfahrensprozedur in analoger Weise bei der Beschichtung der Rückseite wiederholt.

### Beispiel 1:

Der Aufbau eines beispielhaften erfindungsgemäßen wärmedämmenden Anti-Reflex-Schichtsystemes ist in Fig. 2 dargestellt. Das wärmedämmende AR-SS besteht aus folgender Schichtfolge: Floatglas / mittelbrechendes Material (n = 1.65...1.75; Al₂O₃ oder SiOₓN_{y}; ca. λ₀/2) / hochbrechende Schicht (ZnO:Al; ca. λ₀/2) / niedrigbrechende Teilschicht (n=1.46 ... 1.47; SiO₂; ca. λ₀/4). Wesentlich dabei ist, daß die folgende Bedingung erfüllt wurde: n₃ < n₁ ≤ n₂ (vergl. Fig. 2a).

In diesem Ausführungsbeispiel wird ZnO:Al als hochbrechende Teilschicht mit einer optischen Dicke von ca. λ₀/2 eingesetzt. Der Brechungsindex bei 550 nm wird auf einen Wert von 1.95 eingestellt.

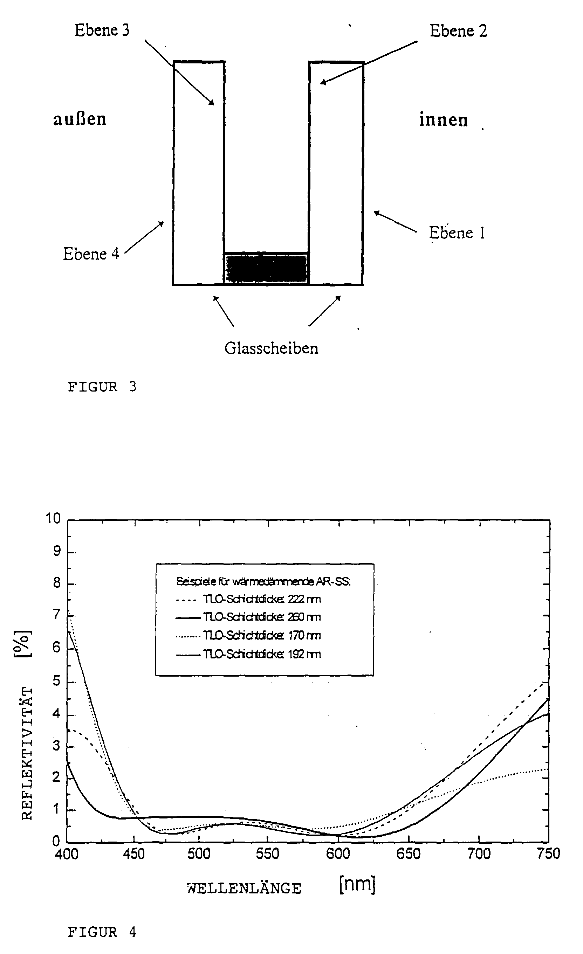

Die erhaltenen Ergebnisse sind in der Tabelle zusammengefaßt. Es zeigt sich, daß bei der gewählten Schichtdicke von ca. 150 nm zunächst nur eine geringe Emissivität (ca. 0.36) pro Schichtpaket erhalten wird. Bringt man nur ein einzelnes wärmedämmendes AR-SS in einer Isolierglaseinheit auf und beschichtet die anderen Ebenen mit Standard-Anti-Reflex-Schichten, lassen sich die Wärmedurchgangskoeffizienten der gesamten Verglasungseinheit lediglich auf Werte von 2.1 W/m²K absenken (vergl. Fig. 3). Um eine bessere Wärmedämmung zu erreichen, werden deshalb gleichzeitig verschiedene Ebenen einer Doppel-Isolierglaseinheit (siehe Fig. 3) mit einem derartigen wärmedämmenden AR-SS beschichtet. Wie aus Tabelle 1 hervorgeht, lassen sich die k-Werte bis auf ca. 1.6 W/m²K bei Argonfüllung absenken.

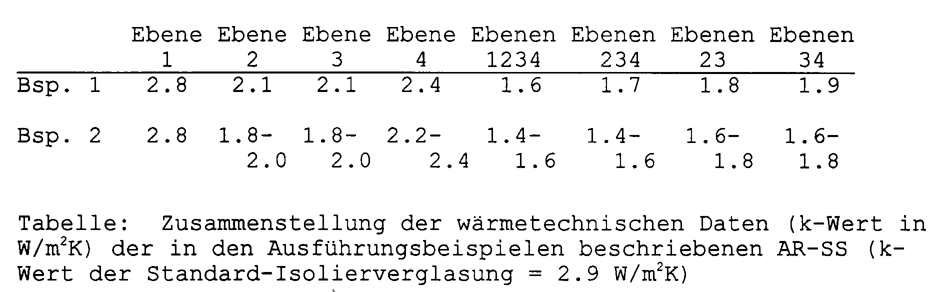

Eine weitere Verbesserung der wärmetechnischen Parameter kann durch die Einbindung einer weiteren TLO-Schicht als mittelbrechendes Material erzielt werden. Als Schichtmaterial läßt sich z. B. eine λ₀/2-dicke SnOₓ:Sb-Schicht oder auch einer Mischung mit ZnO:Al problemlos einsetzen.

### Beispiel 2:

Diesen Untersuchungen wird ebenfalls ein 3-Schichtsystem zugrunde gelegt. Als hochbrechendes Schichtmaterial wird ZnO:Al (vergl. Ausführungsbeispiel 1) eingesetzt.

Im Unterschied zu Ausführungsbeispiel 1 werden deutlich dickere TLO-Schichten (150 nm - 260 nm) in das AR-Interferenzschichtsystem eingebaut. Auf diese Weise lassen sich die wärmetechnischen Daten signifikant verbessern, wie in der Ergebniszusammenstellung in Tabelle 1 deutlich wird.

Mit diesen wärmedämmenden AR-SS können bei einer beidseitigen Entspiegelung mittlere Restreflexionen von ≤ 1 % in einem Wellenlängenbereich von 450 nm bis 650 nm erhalten werden. Einige Reflexionsspektren sind in Fig. 4 dargestellt. Die Lichtdurchlässigkeiten der beidseitig beschichteten Floatgläser liegen bei Werten von ca. > 95 %.

In den beschriebenen Ausführungsbeispielen weisen die TLO-Schichten einen spezifischen Widerstand von 5*10⁻⁴ Ωcm auf. Durch veränderte Prozeßbedingungen sowie auch die Verwendung anderer Materialien bzw. Zusammensetzungen können die elektrischen und optischen Schichteigenschaften variiert und somit ggf. noch bessere Wärmedämmwerte erhalten werden.

Weitere Versuche haben erbracht, daß durch das Aufbringen einer nur wenige Nanometer dicken kohlenstoffhaltigen Plasmapolymerschicht auf der Oberfläche des wärmedämmenden AR-SS ein zusätzlicher Effekt erzeugt werden kann. So läßt sich die Oberflächenspannung (Benetzbarkeit; hydrophile und hydrophobe Eigenschaften) in gewünschter Weise beeinflussen.

Weitergehende Versuche am Substratmaterial Floatglas zeigen, daß durch das Aufbringen einer zusätzlichen siliciumhaltigen Schicht direkt auf dem Substrat, nicht nur eine verbesserte Schichthaftung möglich ist, sondern auch die Diffusion von Alkalimetallionen aus dem Glas in die TLO-Schichten nahezu vollständig unterbunden werden kann. Insbesondere bei einer thermischen Nachbehandlung der Schichtsysteme bzw. bei der Wahl höherer Substrattemperaturen (> 250 °C) lassen sich dadurch die Widerstandswerte verbessern. Dabei ist es erforderlich, daR die Schichtdicke dieser Haftschicht und/oder Diffusionsbarriere derart gering zu wählen ist, daß auch hier keine Beeinflussung des Interferenzverhaltens des AR-SS erfolgen kann.

Einige Experimente mit unterstöchiometrischen TLO-Schichten führten dazu, daß die Lichtdurchlässigkeit ohne deutliche Modifizierung der reflexionsmindernden und wärmedämmenden Eigenschaften des AR-SS vermindert werden kann. So ließen sich bei Einsatz von unterstöchiometrischen In-Sn-Oxiden (Konzentrationsverhältnis: ca. 90:10) graue Farbnuancen in der Durchsicht erzeugen, während die anderen dargestellten Materialien meist eine leicht bräunliche Tönung ergaben.

Die Erfindung ist vor allem für solche Applikationen geeignet, bei denen, neben einer hochqualitativen beidseitigen Reflexionsminderung (Mittelwert der Reflexion möglichst < 1 %) im sichtbaren Spektralbereich, eine zusätzliche Wärmedämmung (Low-Emissivity, Low-E) gefordert wird. Ihr Anwendungsbereich erstreckt sich daher v. a. auf die Herstellung von Verglasungseinheiten für Schaufenster, Gebäude, Vitrinen usw..

Wesentliche Vorteile/Verwendungen der Erfindung bestehen in der:
- Realisierung einer Kombination von antireflektierenden und wärmedämmenden Eigenschaften (Low-E/Anti-Reflex-Schicht);
- Verbesserung der Lichtdurchlässigkeit im sichtbaren Spektralbereich gegenüber den heutigen konventionellen Low-E-Beschichtungen (T > 90 %);
- Verbesserung der Sonnenschutzwirkung gegenüber heutigen großflächigen AR-SS;
- Absorption im UV-Bereich / Schutz vor UV-Strahlung;
- Einsatz bei der großtechnischen Verglasungsherstellung (beliebige Substratgrößen, insbesondere oberhalb 2 * 2 m², insbesondere Bau- oder Architekturglas);
- Einsatz bei der Beschichtung gekrümmter Glasflächen (z. B. Fahrzeugfenster);
- Verringerung des durchschnittlichen Restreflexionsvermögens in einem Wellenlängenbereich von 450 nm bis 650 nm auf Werte ≤ 1 %;
- Erzielung einer ausreichenden Wärmedämmung (k< 1.8 W/m²K) in Verglasungseinheiten; und
- zusätzlichen elektromagnetischen Abschirmung.

Die Erfindung ist nicht auf die dargestellten Ausführungsbeispiele beschränkt. Vielmehr ist es auch möglich, in Standard-AR-SS mindestens eine Teilschicht, die als Gradientenschicht oder Mehrschichtsystem (Brechzahländerung in Größenverhältnissen weit unterhalb der Lichtwellenlänge) aufgebaut ist, durch eine TLO zu ersetzen. Nach dem erfindungsgemäßen Verfahren kann auch die TLO mit einem Brechzahlgradienten als Gradientenschicht hergestellt werden.

Ferner ist es nicht notwendig, daß bei Verglasungen die wärmedämmende Entspiegelung auf beiden Substratoberflächen erfolgt. Vielmehr können auch jeweils verschiedene AR-SS verwendet werden (asymmetrische AR-Beschichtung), wobei z. B. eine Glasseite eine herkömmliche und eine andere Glasseite eine erfindungsgemäße AR-SS trägt. Bei einem System gemäß Fig. 3 wird dabei die mit dem erfindungsgemäßen AR-SS versehene Ebene vorzugsweise im Innern des Verbundes angeordnet.

## Patentansprüche

1. Wärmedämmendes Anti-Reflex-Schichtsystem, das aus Interferenzschichten und/oder mindestens einer Gradientenschicht aufgebaut und mindestens einseitig auf einem für sichtbares Licht transparenten Träger aufgebracht ist,
**dadurch gekennzeichnet, daß**
mindestens eine der Interferenz- und/oder Gradientenschichten durch eine transparente und leitfähige Wärmedämmschicht gebildet wird.

2. Schichtsystem gemäß der Anspruch 1, bei dem die Interferenzschichten auf jeder beschichteten Trägerseite mindestens eine höherbrechende Schicht und mindestens eine niedrigerbrechende Schicht enthalten, wobei mindestens eine der höherbrechenden Schichten durch die Wärmedämmschicht gebildet wird.

3. Schichtsystem gemäß der Anspruch 1, bei dem die Interferenzschichten mindestens eine mittelbrechende Schicht enthalten, die durch die Wärmedämmschicht gebildet wird.

4. Schichtsystem gemäß einem der Ansprüche 1 bis 3, bei dem der Brechungsindex der Wärmedämmschicht bei einer Bezugswellenlänge von 550 nm zwischen 1.6 und 2.2 liegt.

5. Schichtsystem gemäß einem der Ansprüche 1 bis 4, bei dem die optische Dicke n*d der Wärmedämmschicht größer λ₀/4 (λ₀ :Bezugswellenlänge 550 nm) ist.

6. Schichtsystem gemäß Anspruch 5, bei dem die Dicke der Wärmedämmschicht zwischen 80 nm und 500 nm liegt.

7. Schichtsystem gemäß einem der Ansprüche 1 bis 6, bei dem der spezifische Widerstand der Wärmedämmschicht im Bereich unterhalb 2·10⁻³ Ωcm liegt.

8. Schichtsystem gemäß einem der Ansprüche 1 bis 7, bei dem die Wärmedämmschicht Materialien aus undotierten und/oder n-dotierten Halbleitern auf der Basis von Oxiden der Elemente In, Sn, Zn, Cd, Mg, Pb, Cu, V, Ru sowie deren Gemische enthält.

9. Schichtsystem gemäß Anspruch 8, bei dem die Konzentration des Dotanten im Schichtmaterial unterhalb von 20 Atom% liegt.

10. Schichtsystem gemäß einem der Ansprüche 1 bis 9, bei dem der Träger einen Brechungsindex zwischen 1.4 und 1.65 aufweist.

11. Schichtsystem gemaß einem der Ansprüche 1 bis 10, bei dem
- der Träger mindestens eine nur wenige nm-dicke Haftschicht und/oder Diffusionsbarriereschicht aufweist, deren Schichtdicke so gewählt ist, daß die Interferenz des Schichtsystems im wesentlichen unbeeinflußt bleibt, und/oder
- die Oberfläche des Schichtsystems eine die Reflexionsminderung nicht beeinflussende Schutzschicht und/oder eine Schicht zur Modifizierung des Benetzungsverhaltens aufweist.

12. Schichtsystem gemäß einem der Ansprüche 1 bis 11, in dem hochbrechende und/oder mittelbrechende Schichtmaterialien wie Oxide der Elemente Ti, Ta, Zr, Hf, Ce, Nb, Y, Sn, La, Zn, Bi, Al, Si, B, deren Gemische sowie auch Nitride, Oxynitride, Oxycarbide enthalten sind.

13. Verfahren zur Herstellung eines wärmedämmenden Anti-Reflex-Schichtsystems gemäß einem der Ansprüche 1 bis 12, bei dem die Teilschichten, umfassend die Interferenz- und/oder Gradientenschichten bzw. die Wärmedämmschicht, durch eine Vakuumabscheidung, insbesondere mittels reaktiver Magnetron-Kathodenzerstäubung oder dgl. aufgebracht werden.

14. Verfahren gemäß Anspruch 13, bei dem die reaktive Magnetron-Kathodenzerstäubung bei Mittelfrequenz (rund einige 10 kHz) oder gepulste Sputterverfahren betrieben wird.

15. Verfahren gemäß einem der Ansprüche 13 oder 14, bei dem die Substrattemperatur bei der Beschichtung in einem Bereich von ca. 293 K bis 693 K, vorzugsweise unterhalb 423 K, gewählt ist.

16. Verwendung von mindestens einer transparenten und leitfähigen Schicht als Interferenz- und/oder Gradientenschicht in einem wärmedämmenden Anti-Reflex-Schichtsystem zur Bildung einer Wärmedämmschicht.

17. Verwendung eines Schichtsystems gemäß einem der Ansprüche 1 bis 12, bei:
- der Herstellung von Wärmeschutzglas;
- der großtechnischen Verglasungsherstellung, insbesondere Bau- oder Architekturglas;
- der Beschichtung gekrümmter Glasflächen wie z. B. Fahrzeugfenster; und
- einer Verglasung mit elektromagnetischer Abschirmung.
